# EUROPÄISCHE PATENTSCHRIFT

(11) **EP 4 043 279 B1**
(45) Veröffentlichungstag und Bekanntmachung des Hinweises auf die Patenterteilung: **13.09.2023**
(21) Anmeldenummer: 21156667.4
(22) Anmeldetag: 11.02.2021
(51) Int. Cl.: B60P 1/64, B65G 63/06, B66F 3/24, B66F 3/46, B65D 90/12, B66F 3/38

(54) **VORRICHTUNG UND VERFAHREN ZUM TAUSCHEN EINES WECHSELAUFBAUS BEI EINEM LASTKRAFTWAGEN**
DEVICE AND METHOD FOR SWAPPING A SWAP BODY IN A HEAVY GOODS VEHICLE
DISPOSITIF ET PROCÉDÉ DE REMPLACEMENT D'UNE CAISSE MOBILE DANS UN CAMION

(43) Veröffentlichungstag der Anmeldung: 17.08.2022
(73) Patentinhaber: BK-Wechseltechnik GmbH, 86874 Tussenhausen (DE)
(72) Erfinder: BOGENSCHÜTZ, Georg, 86874 Tussenhausen (DE); BRICHTA, Jürgen, 86874 Tussenhausen (DE)
(74) Vertreter: Keller Schneider Patentanwaltsgesellschaft mbH

(56) Entgegenhaltungen:
- EP-A1- 2 730 526
- DE-A1-102014 107 334
- DE-B4-102009 060 700
- FR-A1- 2 401 090
- US-A1- 2016 202 111

## Beschreibung

### TECHNISCHES GEBIET

Die vorliegende Erfindung betrifft eine Vorrichtung zum Tauschen eines Wechselaufbaus bei einem Lastkraftwagen. Ferner betrifft die Erfindung ein Verfahren zum Tauschen eines Wechselaufbaus bei einem Lastkraftwagen.

### STAND DER TECHNIK

Aus der DE 10 2009 060 700 B4 ist eine Vorrichtung zum Tauschen eines Wechselaufbaus bei einem Lastkraftwagen bekannt, die in Verbindung mit einem Lastkraftwagen mit Hinterachsluftfederung verwendet wird. Hierbei wird die Hinterachsluftfederung zum Anheben und Absenken des Wechselaufbaus verwendet. Die Befestigung des Wechselaufbaus auf dem Fahrzeugrahmen erfolgt mit Hilfe von Einschubverankerungen, die als ineinander greifende Klauenverbindungen ausgeführt sind, welche durch eine Fahrbewegung des Lastkraftwagens verbunden oder gelöst werden können, während der Wechselaufbau beim Wechselvorgang in einem hinteren Bereich mittels einer Aufbau-Halteeinrichtung in vertikaler und horizontaler Richtung fixiert wird. Beim Wechselvorgang wird ein vorderer Bereich des Wechselaufbaus mittels einsteckbarer Stützkörper vorne links und rechts gestützt. Hierbei kommen nach dem Absenken des Wechselaufbaus die eingesteckten Stützkörper mit dem Boden in Kontakt und können den Wechselaufbau tragen. Der Lastkraftwagen bzw. der Fahrzeugrahmen hiervon wird weiter abgesenkt und kann so von unterhalb des Wechselaufbaus her nach vorne wegfahren.

Die aus der DE 10 2009 060 700 B4 bekannte Vorrichtung hat den Vorteil, dass es sich um ein sehr einfaches und robustes Wechselsystem handelt, bei dem der Lastkraftwagen nur geringfügig an Nutzlast verliert. Allerdings weist die aus der DE 10 2009 060 700 B4 bekannte Vorrichtung den Nachteil auf, dass deren Bedienung relativ aufwendig ist.

Ferner ist aus der EP 2730 526 A1 ein Fahrzeug-Güterträger bekannt, der an der Seite eines Transportfahrzeugs vorgesehen ist und dazu ausgebildet ist, nach außen zu schwenken und nach innen zurück zu schwenken. Dabei ist der Fahrzeug-Güterträger dazu ausgebildet, Güter nach oben oder unten zu heben, um das Transportfahrzeug (101) zu be- und entladen.

Ferner ist aus der US 2016/202111 A1 ein tragbares Containerhebesystem bekannt. Das System umfasst Hebeeinheiten, die jeweils einen hydraulischen Linearantrieb und eine Montageanordnung zur Befestigung des Antriebs an einem Container enthalten. Das System umfasst eine Reihe von tragbaren Komponenten, die von einem einzigen Arbeiter gehandhabt werden können.

Ferner ist aus der DE 10 2014 107 334 A1 ein Ladesystem für ein Fahrzeug bekannt, mit dem ein Aufbau zwischen einer Transportstellung und einer Verladestellung derart hin und her bewegbar ist, dass ein Ladeboden des Aufbaus während seines Aufladens und während seines Abladens horizontal ausgerichtet ist. Dabei weist das Ladesystem wenigstens eine Bewegungseinrichtung auf, welche eingerichtet ist, geführte Relativbewegungen zwischen dem Fahrzeug und dem Aufbau in Längsrichtung des Fahrzeugs derart zu ermöglichen, dass der Aufbau relativ zu dem Fahrzeug eine bezüglich der Fahrtrichtung des Fahrzeugs rückwärtige Hubstellung einnehmen kann.

Ferner ist aus der FR 2 401 090 A1 ein Vorratssilo bekannt, das waagerecht auf einem Lastwagen montiert ist. Das Silo trägt einen hydraulischen Stützrahmen. Der Rahmen besteht aus einem Balken, der auf am Silo befestigte Stützen passt. Zwei seitliche Träger stützen zwei ausgefahrene Füße, die über Hydraulikzylinder und angelenkt sind. Die Füße werden für den Transport auf dem Lastwagen waagerecht angehoben. Durch Ausfahren des Zylinders kann das Silo in die vertikale Position gebracht werden.

Ausgehend von dem oben aufgeführten Stand der Technik ist es daher Aufgabe der vorliegenden Erfindung, eine verbesserte Vorrichtung anzugeben, die die oben genannten Probleme und Nachteile des Standes der Technik ausräumt. Insbesondere ist es Aufgabe der vorliegenden Erfindung, eine Vorrichtung zum Tauschen eines Wechselaufbaus bei einem Lastkraftwagen bereitzustellen, die sich durch eine besonders einfache Bedienung auszeichnet. Dabei ist es ferner Aufgabe der vorliegenden Erfindung, ein Verfahren anzugeben, das ebenfalls die Nachteile des Standes der Technik ausräumen.

### OFFENBARUNG DER ERFINDUNG

Die Aufgabe wird gelöst mit einer Vorrichtung gemäß Anspruch 1 sowie einem Verfahren gemäß Anspruch 9. Vorteilhafte Weiterbildungen der Erfindung sind Gegenstand der abhängigen Ansprüche.

Die erfindungsgemäße Lösung besteht insbesondere darin, eine Vorrichtung zum Tauschen eines Wechselaufbaus bei einem Lastkraftwagen anzugeben, wobei die Vorrichtung Folgendes aufweist: eine Aufbau-Halteeinrichtung zum Halten des Wechselaufbaus des Lastkraftwagens, und eine Hebeeinrichtung zum Anheben und Absenken des Wechselaufbaus, wobei die Aufbau-Halteeinrichtung mindestens zwei Fixiereinrichtungen aufweist, die dazu ausgebildet sind, zumindest eine Längsrichtungsposition des Wechselaufbaus relativ zu der Fixiereinrichtung beim Tauschvorgang festzusetzen und zu halten, und wobei die Hebeeinrichtung mindestens einen Stützkörper aufweist, der in vertikaler Richtung anhebbar und absenkbar ausgebildet ist. Dabei sind die mindestens zwei Fixiereinrichtungen an einer Stützeinrichtung zwischen einer Fixierposition, in der die Längsposition des Wechselaufbaus relativ zu den Fixiereinrichtungen festgelegt und gehalten ist, und einer Freigabeposition, in der die Längsposition des Wechselaufbaus relativ zu den Fixiereinrichtungen verschiebbar ist, bewegbar angeordnet. Dabei verbindet die Stützeinrichtung die mindestens zwei Fixiereinrichtungen miteinander. Dabei sind die mindestens zwei Fixiereinrichtungen gemeinsam mit der Stützeinrichtung in horizontaler Richtung parallel zu der Längsrichtung des Wechselaufbaus hydraulisch bewegbar ausgebildet. Dabei weist die Aufbau-Halteeinrichtung mindestens eine Trägereinrichtung auf, die einen oberen schienenförmigen Bereich aufweist, und die Stützeinrichtung mindestens einen schlittenförmigen Bereich auf, der auf und entlang des schienenförmigen Bereichs bewegbar ausgebildet ist.

Bei einem Wechselaufbau kann es sich insbesondere um Maschinenaufbauten oder um Transportaufbauten handeln. Beispielsweise kann es sich um einen Kipper, einen Betonmischer, eine Asphaltmulde oder einen Sattelrahmen handeln.

Insbesondere hält die Aufbau-Halteeinrichtung einen hinteren Bereichs des Wechselaufbaus. Der hintere Bereich des Wechselaufbaus ist der Bereich, der bei an dem Lastkraftwagen befestigten Wechselaufbau in Fahrtrichtung gesehen hinten angeordnet ist. Daher fährt der Lastkraftwagen zum Wechseln des Wechselaufbaus vorzugsweise rückwärts auf die Aufbau-Halteinrichtung zu.

Die Hebeeinrichtung dient insbesondere dazu, einen vorderen Bereich des Wechselaufbaus anzuheben und abzusenken. Hierbei kann das Anheben und Absenken manuell oder mittels eines Antriebs angetrieben erfolgen. Bei einer einfachen manuellen Ausführung kann somit eine mechanische Hebeeinrichtung ausreichen. Diese Hebeeinrichtung kann beispielsweise mittels einer Kurbel oder einer Ratsche mit einem Untersetzungsgetriebe ausgebildet sein.

Die Fixiereinrichtung der Aufbau-Halteeinrichtung ist dazu ausgebildet, ein Bewegen des Wechselaufbaus in Längsrichtung des Wechselaufbaus relativ zu der Fixiereinrichtung zu verhindern. Hierdurch kann eine Verriegelung zwischen dem Wechselaufbau und dem Lastkraftwagen, insbesondere einem Fahrzeugrahmen hiervon, gelöst werden. Bei der Verriegelung handelt es sich beispielsweise um mehrere Einschubverankerungen, die durch ein Bewegen, insbesondere Verschieben, von Lastkraftwagen und Wechselaufbau relativ zueinander verbunden oder gelöst werden. Die Einschubverankerungen sind beispielsweise als ineinander greifende Klauenverbindungen ausgeführt. Somit bestehen zwei Möglichkeiten zum Lösen oder Verriegeln der Befestigung zwischen dem Lastkraftwagen und dem Wechselaufbau. Bei der ersten Möglichkeit wird der Lastkraftwagen relativ zu dem von der Aufbau-Halteeinrichtung gehaltenen Wechselaufbau bewegt. Dies kann beispielsweise durch ein Vorwärtsfahren des Lastkraftwagens erfolgen. Bei der zweiten Möglichkeit wird der Wechselaufbau mittels der Aufbau-Halteeinrichtung bei stehendem Lastkraftwagen bewegt.

Erfindungsgemäß ist die Vorrichtung derart aufgebaut, dass die Hebeeinrichtung mindestens einen Stützkörper aufweist, der in vertikaler Richtung anhebbar und absenkbar ausgebildet ist. Der Vorteil liegt hierbei darin, dass die Hebeeinrichtung höhenverstellbar ist, so dass der Wechselaufbau mittels der Hebeeinrichtung aktiv angehoben und abgesenkt werden kann. Dies vereinfacht die Bedienung im Vergleich zum Stand der Technik, bei dem die Hinterachsluftfederung dazu verwendet wird, um den Wechselaufbau anzuheben und abzusenken. Außerdem ist die Vorrichtung so auch bei Fahrzeugen einsetzbar, die über keine ausreichende Hinterachsluftfederung verfügen. Die Hebeeinrichtung und die Aufbau-Halteinrichtung befinden sich nicht an dem Lastkraftwagen oder dem Wechselaufbau, so dass die Nutzlast des Lastkraftwagens hoch ist.

Bei einer bevorzugten Ausgestaltung der vorliegenden Erfindung ist die Hebeeinrichtung mit einer Arbeitsmaschine, vorzugsweise hydraulischen Arbeitsmaschine, verbindbar ausgebildet ist, wobei der mindestens eine Stützkörper anhebbar und absenkbar, vorzugsweise hydraulische anhebbar und absenkbar, ausgebildet ist.

Der Stützkörper wird somit durch eine Arbeitsmaschine angetrieben angehoben und abgesenkt. Hierdurch wird die Bedienung weiter vereinfacht, da das Bewegen des Stützkörpers zumindest maschinenunterstützt oder vorzugsweise automatisch erfolgen kann. Beispielsweise ist es denkbar, dass die Arbeitsmaschine als elektrische, pneumatische oder hydraulische Arbeitsmaschine ausgebildet ist, so dass der mindestens eine Stützkörper entsprechend elektrisch, pneumatisch oder hydraulisch anhebbar und absenkbar ausgebildet ist. Insbesondere wäre es denkbar, dass die pneumatische Arbeitsmaschine ein Druckluftbehälter des Lastkraftwagens ist. So kann ein Zylinder der Hebeeinrichtung mittels eines Druckluftschlauchs mit dem Druckluftbehälter gekoppelt werden. Hierdurch muss keine zusätzliche Arbeitsmaschine bereitgestellt werden.

Die Arbeitsmaschine kann Teil des Lastkraftwagens, Teil der Vorrichtung zum Tauschen eines Wechselaufbaus, insbesondere der Hebeeinrichtung hiervon, oder Teil einer anderen externen Vorrichtung sein.

In der bevorzugten Ausgestaltung ist die Arbeitsmaschine als hydraulische Arbeitsmaschine ausgebildet. Insbesondere ist die hydraulische Arbeitsmaschine eine Pumpe. Die hydraulische Arbeitsmaschine kann besonders bevorzugt Teil des Lastkraftwagens sein.

Gemäß einer vorteilhaften Weiterbildung dieser Ausführungsform weist die Hebeeinrichtung mindestens einen Hydraulikzylinder auf.

Mittels des Hydraulikzylinders wird die Energie der Hydraulikflüssigkeit, die von der hydraulischen Arbeitsmaschine geliefert wird, in eine Linearbewegung umgesetzt. Die Linearbewegung dient zum Anheben und zum Absenken des Stützkörpers und damit des Wechselaufbaus. Bei dem Hydraulikzylinder handelt es sich insbesondere um einen nur einfach wirkenden Zylinder, der nur eine Kolbenseite aufweist, die mit Hydraulikflüssigkeit beaufschlagt wird. Arbeit kann dadurch nur in eine Richtung verübt werden. Hier wird die Arbeit in vertikaler Richtung nach oben verübt. Die Rückbewegung erfolgt durch die Eigenmasse des Wechselaufbaus. Da die Verdichtung der Hydraulik-Flüssigkeit gering ist, kann die Bewegung gleichmäßig und damit gut steuerbar erfolgen. Ferner bietet Hydraulik den Vorteil, dass sehr hohe Kräfte übertragen werden können, so dass auch schwere Wechselaufbauten problemlos angehoben werden können.

Eine besonders vorteilhafte Ausgestaltung der vorliegenden Erfindung sieht vor, dass die Hebeeinrichtung eine erste Hebeeinheit und eine zweite Hebeeinheit aufweist, die an gegenüberliegenden Längsseiten der Vorrichtung ausgebildet sind.

Hierbei weist vorzugsweise jede der Hebeeinheiten einen Stützkörper und je nach Ausführung einen Hydraulikzylinder auf. Die Längsseiten der Vorrichtung entsprechen zumindest im Wesentlichen den Längsseiten des eingefahrenen Lastkraftwagens. So ist eine Hebeeinheit links und eine Hebeeinheit rechts von dem Lastkraftwagen angeordnet. Hierdurch kann ein sicheres, insbesondere gegen Verkippen gesichertes, Anheben auch dann sichergestellt werden, wenn eine Last auf dem Wechselaufbau ungleichmäßig verteilt ist. Vorzugsweise sind die beiden Hebeeinheiten baugleich ausgebildet.

Gemäß einer vorteilhaften Weiterentwicklung der Erfindung ist der mindestens eine Stützkörper in horizontaler Richtung senkrecht zu der Längsrichtung des Wechselaufbaus bewegbar ausgebildet.

Somit ist der mindestens eine Stützkörper nach innen, also zu dem Wechselaufbau hin, und nach außen, also von dem Wechselaufbau weg, bewegbar ausgebildet. Wenn zwei Stützkörper ausgebildet sind, sind diese dann vorzugsweise aufeinander zu und voneinander weg bewegbar. Bei nach außen bewegten Stützkörpern kann der Lastkraftwagen ungestört in die Vorrichtung ein- und ausfahren. Bei nach innen bewegten Stützkörpern können die Stützkörper beim Anheben mit dem Wechselaufbau in Kontakt kommen. Besonders bevorzugt sind die Stützkörper hierbei angetrieben bewegbar ausgebildet. Bei dem Antrieb kann es sich um einen beliebigen der bereits beschriebenen Antriebe handeln. Der Antrieb kann somit elektrisch, pneumatisch oder hydraulisch ausgebildet sein. Besonders bevorzugt ist der der Antrieb artgleich zu dem Antrieb ausgebildet, der zum Anheben und Absenken des Stützkörpers verwendet wird.

Erfindungsgemäß weist die Aufbau-Halteeinrichtung eine Stützeinrichtung auf, an der die mindestens eine Fixiereinrichtung zwischen einer Fixierposition, in der die Längsposition des Wechselaufbaus relativ zu der Fixiereinrichtung festgelegt und gehalten ist, und einer Freigabeposition, in der die Längsposition des Wechselaufbaus relativ zu der Fixiereinrichtung verschiebbar ist, bewegbar ausgebildet ist.

Die Fixiereinrichtung ist somit durch eine Bewegung zwischen der Fixierposition und der Freigabeposition schaltbar. Vorzugsweise sind zwei Fixiereinrichtungen nebeneinander ausgebildet.

Gemäß einer vorteilhaften Weiterentwicklung der Erfindung ist die mindestens eine Fixiereinrichtung schwenkbar ausgebildet.

So kann die Fixiereinrichtung mittels sehr einfacher Bedienung zwischen ihren Positionen bewegt werden. Insbesondere muss hierbei nicht gegen die Masse des Lastkraftwagens oder des Wechselaufbaus gearbeitet werden. Die Fixiereinrichtung ist vorzugsweise u-förmig ausgebildet, so dass die Fixiereinrichtung einfach um den hinteren Bereich des Wechselaufbaus herum umgeklappt werden kann. Der hintere Bereich des Wechselaufbaus ist dann im Inneren der U-Form gehalten. Nach unten liegt der hintere Bereich auf der Stützeinrichtung, insbesondere einem oberen Bereich hiervon, auf. Wie im Folgenden noch ausführlicher dargestellt, kann dieser obere Bereich schlittenförmig ausgebildet sein.

Erfindungsgemäß ist zumindest die mindestens eine Fixiereinrichtung in horizontaler Richtung in Längsrichtung des Wechselaufbaus bewegbar, insbesondere hydraulisch bewegbar, ausgebildet.

Da der Wechselaufbau an der Fixiereinrichtung gehalten wird, ist es mittels Bewegen der Fixiereinrichtung möglich, den Wechselaufbau außer Eingriff von dem Lastkraftwagen zu bringen. Dies entspricht der eingangs genannten zweiten Möglichkeit zum Lösen der Verbindung zwischen Lastkraftwagen und Wechselaufbau. Der Vorteil liegt hierbei darin, dass der Fahrer nicht mehr in den Lastkraftwagen einsteigen muss und diesen nach vorne bewegen muss. Entsprechend wird auch hiermit die Bedienung noch einfacher. Gemeinsam mit der vereinfachten Bedienung der Hebeeinrichtung, insbesondere der hydraulisch angetriebenen Hebeeinrichtung, ergibt sich eine besonders gute Bedienbarkeit. Der Antrieb zum Bewegen der Fixiereinrichtung kann elektrisch, pneumatisch oder vorzugsweise hydraulisch erfolgen. Entsprechend kann die Aufbau-Halteeinrichtung vorzugsweise einen Hydraulikzylinder aufweisen und mit einer hydraulischen Arbeitsmaschine verbindbar ausgebildet sein. Besonders bevorzugt handelt es sich um die hydraulische Arbeitsmaschine, die auch mit der Hebeeinrichtung verbindbar ausgebildet ist. Bei dem Hydraulikzylinder handelt es sich vorzugsweise um einen doppelt wirkenden Zylinder. Der Zylinder weist zwei gegenüberliegende Kolbenflächen auf, die mit Hydraulikflüssigkeit beaufschlagt werden können, so dass der Zylinder zwei aktive Bewegungsrichtungen aufweist.

Erfindungsgemäß weist die Aufbau-Halteeinrichtung mindestens zwei Fixiereinrichtungen auf, die an der Stützeinrichtung zwischen der Fixierposition und der Freigabeposition bewegbar angeordnet sind, wobei die Stützeinrichtung die beiden Fixiereinrichtungen miteinander verbindet, und wobei die mindestens zwei Fixiereinrichtungen gemeinsam mit der Stützeinrichtung in horizontaler Richtung parallel zu der Längsrichtung des Wechselaufbaus hydraulisch bewegbar ausgebildet sind.

Wenn zwei Fixiereinrichtungen verwendet werden, können diese im Vergleich zur Verwendung von einer einzigen Fixiereinrichtung für kleiner Kräfte ausgelegt und so kleiner dimensioniert werden. Außerdem lässt sich eine Verklemmgefahr der Vorrichtung beim Entriegeln oder Verriegeln von Wechselaufbau und Lastkraftwagen verringern. Da die Stützeinrichtung die beiden Fixiereinrichtungen miteinander verbindet, reicht es aus, die Stützeinrichtung zu bewegen, um eine Bewegung der beiden Fixiereinrichtungen hervorzurufen. So ist es möglich, beide Fixiereinrichtungen mit nur einem Hydraulikzylinder zu bewegen.

Erfindungsgemäß weist die Aufbau-Halteeinrichtung mindestens eine Trägereinrichtung auf, die einen schienenförmigen oberen Bereich aufweist, wobei die Stützeinrichtung mindestens einen schlittenförmigen Bereich aufweist, der auf und entlang des schienenförmigen Bereichs bewegbar ausgebildet ist.

Hierdurch lässt sich ein geführtes Bewegen der Stützeinrichtung relativ zu der Trägereinrichtung umsetzen. Durch die schienenförmige und schlittenförmige Ausbildung ist eine gute Führung in Längsrichtung möglich. Vorzugsweise weist die Aufbau-Halteeinrichtung zwei Trägereinrichtungen für eine Stützeinrichtung mit zwei schienenförmigen Bereichen auf.

Bei einer weiteren Ausführungsform der vorliegenden Erfindung sind die Aufbau-Halteeinrichtung und die Hebeeinrichtung am Boden oder einer Bodenplatte befestigt ausgebildet.

Die Hebeeinrichtung und die Aufbau-Halteinrichtung befinden sich also insbesondere nicht an dem Lastkraftwagen oder dem Wechselaufbau, sondern an dem Ort, an dem der Aufbauwechsel stattfindet. Hierdurch wird die Nutzlast des Lastkraftwagens nicht gesenkt. Die Bodenplatte bietet eine besonders einfache Möglichkeit, die einzelnen Einrichtungen in einem richtigen Abstand und in einer richtigen Ausrichtung zueinander anzuordnen.

In einer weiteren vorteilhaften Ausgestaltung der Erfindung weist die Vorrichtung mindestens eine Einfahrschiene zum Positionieren des Lastkraftwagens auf.

Vorzugsweise weist die Vorrichtung zwei Einfahrschienen auf. Die mindestens eine Einfahrschiene kann an der Bodenplatte befestigt sein. Insgesamt stellen die Einfahrschienen ein zum Wechseln der Wechselaufbauten richtiges Positionieren des Lastkraftwagens sicher.

Ferner wird die Aufgabe mittels eines Verfahrens zum Tauschen eines Wechselaufbaus bei einem Lastkraftwagen gelöst, wobei das Verfahren folgende Schritte aufweist: Positionieren eines Lastkraftwagens mit Wechselaufbau in einer Vorrichtung zum Tauschen eines Wechselaufbaus; Schließen von zumindest einer Fixiereinrichtung an einer Aufbau-Halteeinrichtung der Vorrichtung, um eine Längsrichtungsposition des Wechselaufbaus relativ zu der Fixiereinrichtung festzusetzen und zu halten; Lösen einer Verriegelung zwischen dem Wechselaufbau und dem Fahrzeugrahmen des Lastkraftwagens durch Bewegen von Wechselaufbau und Fahrzeugrahmen relativ zueinander; Anordnen mindestens eines Stützkörpers einer Hebeeinrichtung an dem Wechselaufbau; und Anheben des Wechselaufbaus mittels Anheben des Stützkörpers.

Die Schritte werden insbesondere in der genannten Reihenfolge durchgeführt. Optional kann vor dem Lösen der Verriegelung und nach dem Schließen der Fixiereinrichtung ein Schritt zum Freigeben der Verriegelung erfolgen. Hierdurch wird sichergestellt, dass sich die Verriegelung nicht ungewollt lösen kann. Beispielsweise kann es sich hierbei um einfache Sicherungen, wie Keile, Bolzen oder Riegel, handeln, die entfernt werden.

Nach dem Anheben des Wechselaufbaus kann der Lastkraftwagen ohne Wechselaufbau aus der Vorrichtung herausfahren. Zum Montieren des Wechselaufbaus wird entsprechend die umgekehrte Reihenfolge der Schritte verwendet.

Der Vorteil des Verfahrens liegt in der benutzerfreundlichen Bedienung. Die Schritte sind einfach und leicht anwendbar, so dass eine geringe Wahrscheinlichkeit für Bedienfehler beim Wechseln des Wechselaufbaus besteht. Auch ungeschultes Personal kann die Wechseleinrichtung so bedienen.

Bei der im Zusammenhang mit dem Verfahren verwendeten Vorrichtung zum Tauschen eines Wechselaufbaus bei einem Lastkraftwagen handelt es sich um eine der vorab beschriebenen erfindungsgemäßen Vorrichtungen zum Tauschen eines Wechselaufbaus bei einem Lastkraftwagen.

Daher sind die bereits im Zusammenhang mit der Vorrichtung beschriebenen Merkmale und Aspekte gleichermaßen bei dem Verfahren zu finden. Entsprechend sind die bereits bezüglich der einzelnen Vorrichtungen genannten Vorteile auch auf das Verfahren übertragbar und werden hier nicht einzeln wiederholt.

Gemäß einer vorteilhaften Weiterbildung dieser Ausführungsform erfolgt das Lösen der Verriegelung mittels Bewegen des Lastkraftwagens. Insbesondere wird hierbei der Lastkraftwagen nach vorne gefahren. Eine besonders vorteilhafte Ausgestaltung der vorliegenden Erfindung sieht vor, dass das Lösen der Verriegelung mittels Bewegen von zumindest der mindestens einen Fixiereinrichtung erfolgt. Vorteilhafterweise ist so ein Bewegen des Fahrzeugs nicht mehr nötig. Das Bewegen der mindestens einen Fixiereinrichtung erfolgt vorzugsweise wiederum hydraulisch.

### KURZE BESCHREIBUNG DER ZEICHNUNGEN

Weitere Merkmale, Vorteile und Ausführungsformen der Erfindung ergeben sich aus der nachfolgenden Beschreibung von Ausführungsformen der Vorrichtung zum Tauschen eines Wechselaufbaus bei einem Lastkraftwagen und anhand der Figuren. Es zeigen:
- Fig. 1: eine erste schematische Darstellung einer Vorrichtung zum Tauschen eines Wechselaufbaus beim Tauschen des Wechselaufbaus eines Lastkraftwagens im Stand der Technik;
- Fig. 2: eine zweite schematische Darstellung der Vorrichtung zum Tauschen eines Wechselaufbaus beim Tauschen des Wechselaufbaus eines Lastkraftwagens im Stand der Technik;
- Fig. 3: eine schematische Darstellung einer Vorrichtung zum Tauschen eines Wechselaufbaus gemäß der vorliegenden Erfindung;
- Fig. 4: eine schematische Darstellung einer Hebeeinrichtung der in Fig. 3 gezeigten Vorrichtung zum Tauschen eines Wechselaufbaus gemäß der vorliegenden Erfindung;
- Fig. 5: eine schematische Darstellung einer Aufbau-Halteeinrichtung der in Fig. 3 gezeigten Vorrichtung zum Tauschen eines Wechselaufbaus gemäß der vorliegenden Erfindung in einer Freigabeposition; und
- Fig. 6: eine schematische Darstellung der in Fig. 5 gezeigten Aufbau-Halteeinrichtung in einer Fixierposition

### AUSFÜHRUNGSFORMEN DER ERFINDUNG

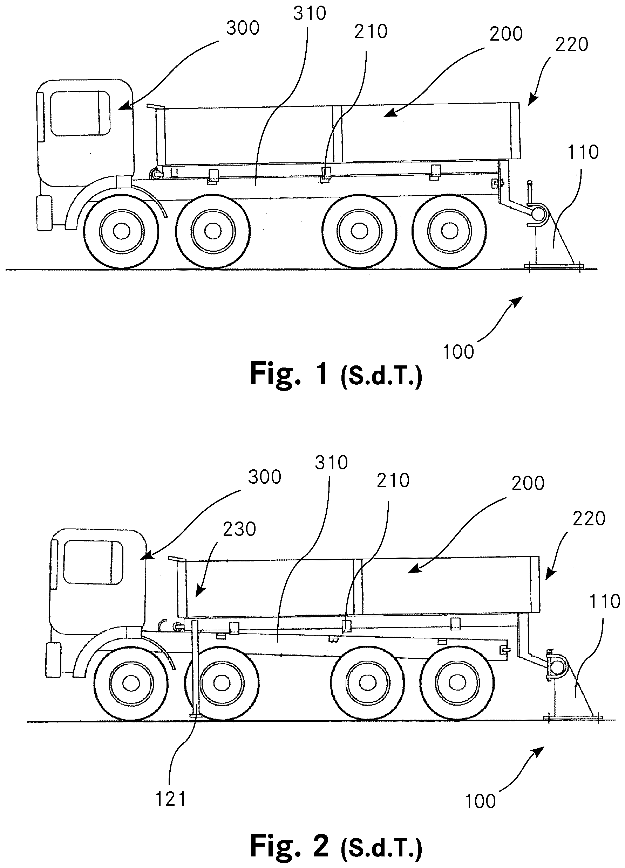

Fig. 1 zeigt eine erste schematische Darstellung einer Vorrichtung 100 zum Tauschen eines Wechselaufbaus 200 beim Tauschen des Wechselaufbaus 200 eines Lastkraftwagens 300 im Stand der Technik.

Der Lastkraftwagen 300 weist einen Fahrzeugrahmen 310 auf, an dem mittels Verriegelungen 210 der Wechselaufbau 200 befestigt ist. Die Verriegelungen 210 sind als Einschubverankerungen ausgebildet.

Der in Fig. 1 gezeigte Lastkraftwagen 300 ist in der Vorrichtung 100 eingefahren abgebildet. Vor dem Einfahren hebt der Lastkraftwagen 300 den Fahrzeugrahmen 310 mittels seiner Hinterachsluftfederung auf ein Maximalniveau an. Dann fährt der Lastkraftwagen 300 rückwärts gegen eine Aufbau-Halteeinrichtung 110 der Vorrichtung 100. In der Aufbau-Halteeinrichtung 110 kann ein hinterer Bereich 220 des Wechselaufbaus 200 fixiert werden. Dadurch ist es möglich, dass der Lastkraftwagen 300 nach vorne fährt, während der Wechselaufbau 200 von der Aufbau-Halteeinrichtung1 10 festgehalten wird. Hierdurch werden die Verriegelung 210 gelöst.

Bei der in Fig. 2 gezeigten schematischen Darstellung der Vorrichtung 100 ist der Wechselvorgang bereits einen Schritt weiter. An einem vorderen Bereich 230 des Wechselaufbaus 200 ist ein Stützkörper 121 angeordnet worden. Wird der Fahrzeugrahmen 310 weiter mittels der Hinterachsluftfederung abgesenkt, kommt der Stützkörper 121 mit dem Boden in Kontakt. Dann ist der Wechselaufbau 200 vollständig von dem Stützkörper 121 und der Aufbau-Halteeinrichtung 110 getragen, sodass der Lastkraftwagen 300 von unterhalb des Wechselaufbaus 200 nach vorne wegfahren kann. Auf diese Weise kann der Wechselaufbau 200 vollständig von dem Lastkraftwagen 300 bzw. von dessen Fahrzeugrahmen 310 gelöst werden. Das Befestigen des Wechselaufbaus 200 an dem Lastkraftwagen 300 erfolgt in umgekehrter Reihenfolge.

Auch wenn es sich in den in Fig. 1 und 2 gezeigten Darstellungen um eine Vorrichtung 100 zum Tauschen eines Wechselaufbaus 200 aus dem Stand der Technik handelt, können diese dennoch dazu dienen, ein grundsätzliches Verständnis für das Aufbauwechseln zu schaffen.

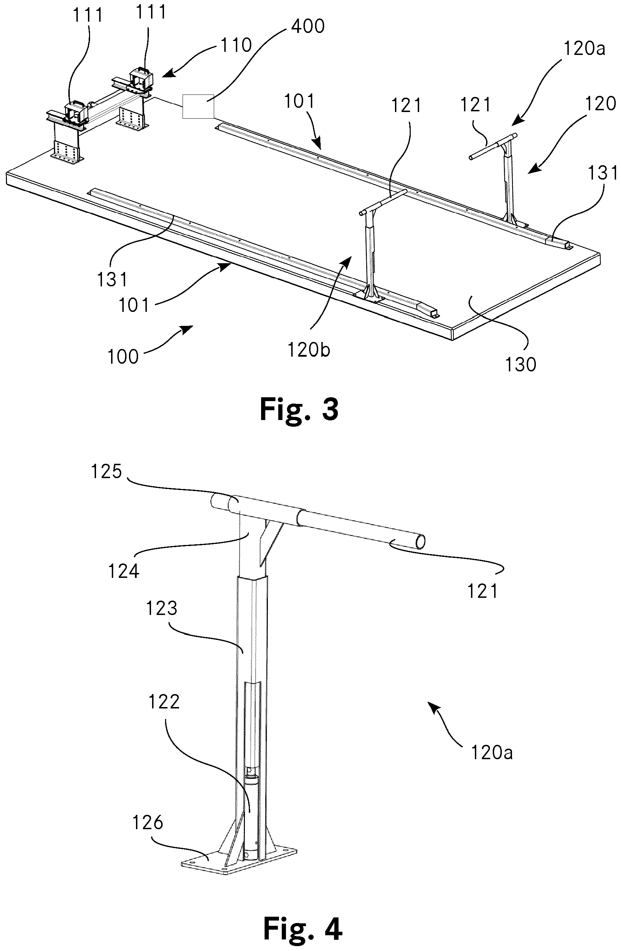

Fig. 3 zeigt eine schematische Darstellung einer Vorrichtung 100 zum Tauschen eines Wechselaufbaus 200 gemäß der vorliegenden Erfindung. Die Vorrichtung 100 weist eine Bodenplatte 130 auf. Auf der Bodenplatte 130 sind zwei Einfahrschienen 131 befestigt. Insbesondere sind die Einfahrschienen 131 an gegenüberliegenden Längsseiten 101 der Vorrichtung 100 befestigt und zumindest im Wesentlichen parallel zu diesen Längsseiten 101 ausgerichtet. Die Einfahrschienen 131 dienen dazu, den Lastkraftwagen 300 zum Wechseln des Wechselaufbaus 200 korrekt zu positionieren. Wie auch in Fig. 1 und Fig. 2 fährt der Lastkraftwagen 300 rückwärts in die Vorrichtung 100 ein. Insbesondere fährt dieser rückwärts (d. h. von rechts nach links in Fig. 3) auf die Bodenplatte 130.

An einem hinteren Bereich der Vorrichtung 100 ist eine Aufbau-Halteeinrichtung 110 ausgebildet. Die Aufbau-Halteeinrichtung 110 weist Fixiereinrichtungen 111 auf, mittels derer ein hinterer Bereich 220 des Wechselaufbaus 200 (ähnlich wie in Fig. 1) fixiert werden kann.

An einem vorderen Bereich der Vorrichtung 100 ist eine Hebeeinrichtung 120 ausgebildet, die eine erste Hebeeinheit 120a und eine zweite Hebeeinheit 120b aufweist. Die erste Hebeeinheit 120a ist an der ersten Längsseite 101 angeordnet und die zweite Hebeeinheit 120b ist an der gegenüberliegenden Längsseite 101 angeordnet. Daher ist die erste Hebeeinheit 120a bei eingefahrenem Lastkraftwagen 300 links von dem Lastkraftwagen 300 angeordnet und die zweite Hebeeinheit 120b rechts von dem Lastkraftwagen 300 angeordnet. Jede der Hebeeinheiten 120a, 120b weist einen Stützkörper 121 auf. Im Gegensatz zu dem in Fig. 1 und Fig. 2 gezeigten Stand der Technik ist der Stützkörper 121 hierbei anhebbar und absenkbar. Dieser und andere Unterschiede sind insbesondere in Fig. 4 zu erkennen.

Fig. 4 zeigt die Hebeeinrichtung 120, insbesondere die erste Hebeeinheit 120a hiervon. Da die zweite Hebeeinheit 120b vorzugsweise baugleich ausgeführt ist, sind sämtliche in Bezug auf die erste Hebeeinheit 120a beschriebenen Aspekte auch auf die zweite Hebeeinheit 120b übertragbar.

Die Hebeeinheit 120a weist eine Befestigungsplatte 126 auf, mittels derer die Hebeeinrichtung 120 bzw. die erste Hebeeinheit 120a auf der Bodenplatte 130 befestigbar ist. Von der Befestigungsplatte 126 erstreckt sich eine Basis 123 zumindest im Wesentlichen senkrecht nach oben. Die Basis 123 dient als Führung für eine Halterung 124. In der Basis 123 ist ein Hydraulikzylinder 122 angeordnet. Der Hydraulikzylinder 122 ist dazu ausgebildet, die Halterung 124 auf und ab zu bewegen. Hierdurch ist der an der Halterung 124 angeordnete Stützkörper 121 in vertikaler Richtung anhebbar und absenkbar ausgebildet. Der Stützkörper 121 ist stabförmig, hier insbesondere rohrförmig, ausgebildet. Der Hydraulikzylinder 122 ist mit einer in Fig. 3 angedeuteten Arbeitsmaschine 400 verbindbar. Alternativ zu dem Hydraulikzylinder 122 wären auch andere Linearantriebe elektrischer, pneumatischer oder mechanischer Art denkbar.

Die Halterung 124 weist ein Rohrelement 125 auf, in dem der Stützkörper 121 verschiebbar gelagert ist. Insbesondere ist der Stützkörper 121 in horizontaler Richtung senkrecht zu der Längsrichtung der Vorrichtung 100 verschiebbar. So ist es möglich, den Stützkörper 121 nach innen und nach außen zu schieben. Fährt ein Lastkraftwagen 300 in die Vorrichtung 100 ein, befinden sich die Stützkörper 121 in einer äußeren Position. Ist der Lastkraftwagen 300 in die Vorrichtung 100 eingefahren und richtig positioniert, kann der Stützkörper 121 in eine innere Position gebracht werden, in der der Stützkörper 121 mit dem Wechselaufbau 200 durch Anheben in Kontakt bringbar sind. Beispielsweise kann die Bewegung angetrieben ausgeführt werden. Hierzu kann jeder bereits im Zusammenhang mit der Hebeeinrichtung beschriebene Antrieb verwendet werden. Der Antrieb kann insbesondere mechanisch, elektrisch, pneumatisch oder hydraulisch ausgebildet sein.

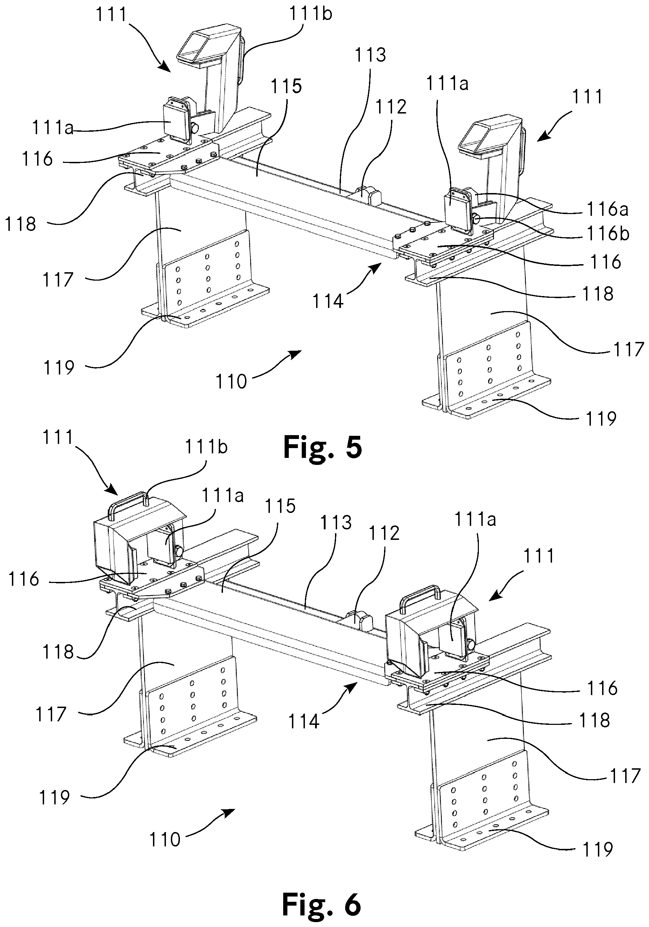

Fig. 5 und Fig. 6 zeigen schematische Darstellungen der Aufbau-Halteeinrichtung 110 der erfindungsgemäßen Vorrichtung 100 zum Tauschen eines Wechselaufbaus 200. Hierbei zeigt Fig. 5 die Aufbau-Halteeinrichtung 110 in einer Freigabeposition und Fig. 6 die Aufbau-Halteeinrichtung 110 in einer Fixierposition.

Wie in Fig. 5 und Fig. 6 zu erkennen, weist die Aufbau-Halteeinrichtung 110 zwei Trägereinrichtungen 117 auf, die mittels Befestigungsplatten 119 an der Bodenplatte130 befestigbar sind. Die Trägereinrichtungen 117 weisen jeweils einen oberen schienenförmigen Bereich 118 auf. Hier ist der obere schienenförmige Bereich 118 als Doppel-T-Träger ausgebildet.

Auf dem schienenförmigen Bereich 118 ist eine Stützeinrichtung 114 ausgebildet. Die Stützeinrichtung 114 weist zwei schlittenförmige Bereiche 116 auf, die jeweils auf einem der schienenförmigen Bereiche 118 bewegbar, insbesondere verschiebbar, angeordnet sind. Außerdem weist die Stützeinrichtung 114 ein Verbindungselement 115 auf, das die beiden schlittenförmigen Bereiche 116 miteinander verbindet. So ist es möglich, die beiden schlittenförmigen Bereiche 116 zusammen über das Verbindungselement 115 zu bewegen. Hierzu weist die Aufbau-Halteeinrichtung 110 einen Hydraulikzylinder 112 auf, der mit einer Seite an einem Querrahmen 113 und mit der anderen Seite an dem Verbindungselement 115 angebracht ist. So ist es möglich mittels des Hydraulikzylinders 112, das Verbindungselement 115 relativ zu dem Querrahmen 113 zu bewegen. Der Querrahmen 113 ist hierbei an der Trägereinrichtung 117 angeordnet, so dass der schlittenförmige Bereich 116 relativ zu der Trägereinrichtung 117 bewegbar ist. Die Bewegungsrichtung entspricht hierbei der Längsrichtung der Aufbau-Halteeinrichtung 110.

Die Aufbau-Halteeinrichtung 110 weist ferner zwei Fixiereinrichtungen 111 auf, mittels derer der hintere Bereich 220 des Wechselaufbaus 200 gehalten bzw. fixiert werden kann.

Wie in Fig. 5 und Fig. 6 zu erkennen, sind die Fixiereinrichtungen 111 jeweils an Halterungen 116a am schlittenförmigen Bereich 116 befestigt. Genauer weist jeder schlittenförmige Bereich 116 die sich vertikal nach oben erstreckende Halterung 116a auf, an der die entsprechende Fixiereinrichtung 111 schwenkbar befestigt ist. Insbesondere ist die Fixiereinrichtung 111 mittels eines Stifts 116b an der entsprechenden Halterung 116a befestigt. Die Fixiereinrichtung 111 ist somit um eine axial durch den Stift 116b verlaufende Schwenkachse schwenkbar.

In der Fig. 5 ist die Fixiereinrichtung 111 in ihrer Freigabeposition gezeigt, in der der Wechselaufbau 200 nicht gehalten wird. Diese Freigabeposition wird beispielsweise beim Einfahren des Lastkraftwagens 300 in die Vorrichtung 100 verwendet. In dieser Freigabeposition ist die Längsposition des Wechselaufbaus 200, also die Position in Längsrichtung der Vorrichtung 100, relativ zu der Fixiereinrichtung 111 bzw. dem schlittenförmigen Bereich 116 verschiebbar. So kann der hintere Bereich 220 des Wechselaufbaus 200 auf dem schlittenförmigen Bereich 116 positioniert werden und von diesem wieder entfernt werden. Um ein zu hartes Anstoßen des hinteren Bereichs 220 zu verhindern, weist die Fixiereinrichtung 111 einen Anfahrklotz 111a auf. Dieser Anfahrklotz 111a ist dazu ausgebildet, einen Stoß durch den Wechselaufbau 200 zu dämpfen. Insbesondere ist anzumerken, dass der Anfahrklotz 111a vorzugsweise direkt an der Halterung 116a angeordnet ist, sodass die Kraft direkt von dem Anfahrklotz 111a über die Halterung 116a auf die Trägereinrichtung 117a abgeleitet werden kann. Hierdurch wird die empfindlichere Fixiereinrichtung 111 und insbesondere ihr Schwenkmechanismus geschont.

Wenn der hintere Bereich 220 des Wechselaufbaus 200 auf dem schlittenförmigen Bereich 116 positioniert ist, wird die Fixiereinrichtung 111 in ihre Fixierposition gebracht. Die Fixierposition ist in Fig. 6 dargestellt. Hierzu wird die Fixiereinrichtung 111 um die Schwenkachse d. h. den Stift 116b geschwenkt. Durch ihre zumindest im Wesentlichen u-förmige Ausbildung kann die Fixiereinrichtung 111 dann den hinteren Bereich 220 des Wechselaufbaus 200 festhalten, ohne zusätzlich gesperrt werden zu müssen. Insbesondere ist so in der Fixierposition die Längsposition des Wechselaufbaus 200 relativ zu der Fixiereinrichtung 111 bzw. dem schlittenförmigen Bereich 116 festgelegt bzw. fixiert. Wird nun der schlittenförmige Bereich 116 bewegt, bewegt sich der Wechselaufbau 200 mit. So ist es möglich, die Verriegelung 210 zwischen dem Wechselaufbau 200 und dem Lastkraftwagen 300 zu lösen. Um ein komfortableres Bewegen der Fixiereinrichtung 111 zwischen der Fixierposition und der Freigabeposition zu ermöglichen, weist die Fixiereinrichtung 111 einen Griff 111b auf. Der Griff 111b ist hier exemplarisch am Rücken der u-förmigen Fixiereinrichtung 111 angeordnet.

Zusammengefasst bietet die in den Figuren gezeigte Vorrichtung 100 eine einfache und komfortable Bedienung beim Wechsel von Wechselaufbauten 200.

Es versteht sich, dass bei der vorliegenden Erfindung ein Zusammenhang zwischen einerseits Merkmalen besteht, die im Zusammenhang mit Verfahrensschritten beschrieben wurden, sowie andererseits Merkmalen, die im Zusammenhang mit entsprechenden Vorrichtungen beschrieben wurden. Somit sind beschriebene Verfahrensmerkmale auch als zur Erfindung gehörige Vorrichtungsmerkmale - und umgekehrt - anzusehen, selbst wenn dies nicht explizit erwähnt wurde.

Es ist festzuhalten, dass die unter Bezug auf einzelne Ausführungsformen bzw. Varianten beschriebenen Merkmale der Erfindung, wie beispielsweise Art und Ausgestaltung der einzelnen Komponenten sowie deren genaue Dimensionierung und räumliche Anordnung, auch bei anderen Ausführungsformen vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.
- 310: Fahrzeugrahmen
- 400: Arbeitsmaschine

## Patentansprüche

1. Vorrichtung (100) zum Tauschen eines Wechselaufbaus (200) bei einem Lastkraftwagen (300), wobei die Vorrichtung (100) Folgendes aufweist:
- eine Aufbau-Halteeinrichtung (110) zum Halten des Wechselaufbaus (200) des Lastkraftwagens (300), und
- eine Hebeeinrichtung (120) zum Anheben und Absenken des Wechselaufbaus (200),
wobei die Aufbau-Halteeinrichtung (110) mindestens zwei Fixiereinrichtungen (111) aufweist, die dazu ausgebildet sind, zumindest eine Längsrichtungsposition des Wechselaufbaus (200) relativ zu der Fixiereinrichtung (111) beim Tauschvorgang festzusetzen und zu halten, und
wobei die Hebeeinrichtung (120) mindestens einen Stützkörper (121) aufweist, der in vertikaler Richtung anhebbar und absenkbar ausgebildet ist,
wobei die mindestens zwei Fixiereinrichtungen (111) an einer Stützeinrichtung (114) zwischen einer Fixierposition, in der die Längsposition des Wechselaufbaus (200) relativ zu den Fixiereinrichtungen (111) festgelegt und gehalten ist, und einer Freigabeposition, in der die Längsposition des Wechselaufbaus (200) relativ zu den Fixiereinrichtungen (111) verschiebbar ist, bewegbar angeordnet sind,
**dadurch gekennzeichnet, dass** die Stützeinrichtung (114) die mindestens zwei Fixiereinrichtungen (111) miteinander verbindet,
dass die mindestens zwei Fixiereinrichtungen (111) gemeinsam mit der Stützeinrichtung (114) in horizontaler Richtung parallel zu der Längsrichtung des Wechselaufbaus (200) hydraulisch bewegbar ausgebildet sind,
dass die Aufbau-Halteeinrichtung (110) mindestens eine Trägereinrichtung (117) aufweist, die einen oberen schienenförmigen Bereich (118) aufweist, und
dass die Stützeinrichtung (114) mindestens einen schlittenförmigen Bereich (116) aufweist, der auf und entlang des schienenförmigen Bereichs (118) bewegbar ausgebildet ist.

2. Vorrichtung (100) nach Anspruch 1,
wobei die Hebeeinrichtung (120) mit einer Arbeitsmaschine (400), vorzugsweise hydraulischen Arbeitsmaschine (400), verbindbar ausgebildet ist und der mindestens eine Stützkörper (121) anhebbar und absenkbar, vorzugsweise hydraulische anhebbar und absenkbar, ausgebildet ist.

3. Vorrichtung (100) nach Anspruch 2,
wobei die Hebeeinrichtung (120) mindestens einen Hydraulikzylinder (122) aufweist.

4. Vorrichtung (100) nach einem der Ansprüche 1 bis 3,
wobei die Hebeeinrichtung (120) eine erste Hebeeinheit (120a) und eine zweite Hebeeinheit (120b) aufweist, die an gegenüberliegenden Längsseiten (101) der Vorrichtung (100) ausgebildet sind.

5. Vorrichtung (100) nach einem der vorherigen Ansprüche,
wobei der mindestens eine Stützkörper (121) in horizontaler Richtung senkrecht zu der Längsrichtung des Wechselaufbaus (200) bewegbar ausgebildet ist.

6. Vorrichtung (100) nach einem der vorherigen Ansprüche,
wobei die mindestens eine Fixiereinrichtung (111) schwenkbar ausgebildet ist.

7. Vorrichtung (100) nach einem der vorherigen Ansprüche,
wobei die die Aufbau-Halteeinrichtung (110) und die Hebe-Einrichtung (120) am Boden oder einer Bodenplatte (130) befestigt ausgebildet sind.

8. Vorrichtung (100) nach einem der vorherigen Ansprüche,
wobei die Vorrichtung (100) mindestens eine Einfahrschiene (131) zum Positionieren des Lastkraftwagens (300) aufweist.

9. Verfahren zum Tauschen eines Wechselaufbaus (200) bei einem Lastkraftwagen (300), wobei das Verfahren folgende Schritte aufweist:
- Positionieren eines Lastkraftwagens (300) mit Wechselaufbau (200) in einer Vorrichtung (100) nach einem der vorherigen Ansprüche zum Tauschen eines Wechselaufbaus (200);
- Schließen von zumindest zwei Fixiereinrichtungen (111) an der Aufbau-Halteeinrichtung (110) der Vorrichtung (100), um eine Längsrichtungsposition des Wechselaufbaus (200) relativ zu der Fixiereinrichtung (111) festzusetzen und zu halten;
- Lösen einer Verriegelung (210) zwischen dem Wechselaufbau (200) und dem Fahrzeugrahmen (310) des Lastkraftwagens (300) durch Bewegen von Wechselaufbau (200) und Fahrzeugrahmen (310) relativ zueinander;
- Anordnen mindestens eines Stützkörpers (121) der Hebeeinrichtung (120) an dem Wechselaufbau (200); und
- Anheben des Wechselaufbaus (200) mittels Anheben des Stützkörpers (121).

10. Verfahren nach Anspruch 9,
wobei das Lösen der Verriegelung (210) mittels Bewegen des Lastkraftwagens (300) erfolgt.

11. Verfahren nach Anspruch 9,
wobei das Lösen der Verriegelung (210) mittels Bewegen von zumindest den zwei Fixiereinrichtungen (111) erfolgt.

## Claims

1. Apparatus (100) for swapping a swap body (200) on a heavy goods vehicle (300), the apparatus (100) comprising:
- a body holding device (110) for holding the swap body (200) of the heavy goods vehicle (300), and
- a lifting device (120) for raising and lowering the swap body (200),
wherein the body holding device (110) comprises at least two fixing devices (111) adapted to fix and hold at least one longitudinal direction position of the swap body (200) relative to the fixing device (111) during the swapping operation, and wherein the lifting device (120) comprises at least one supporting body (121) configured to be raised and lowered in the vertical direction,
wherein the at least two fixing devices (111) are arranged on a supporting device (114) so as to be movable between a fixing position, in which the longitudinal position of the swap body (200) is fixed and held relative to the fixing devices (111), and a release position, in which the longitudinal position of the swap body (200) is displaceable relative to the fixing devices (111) **characterized in that**
the supporting device (114) connects the at least two fixing devices (111) to one another,
**in that** the at least two fixing devices (111) are configured to be hydraulically movable together with the supporting device (114) in the horizontal direction parallel to the longitudinal direction of the swap body (200),
**in that** the body holding device (110) comprises at least one carrying device (117) which comprises an upper rail-shaped region (118), and
**in that** the supporting device (114) comprises at least one sled-shaped area (116) which is configured to be movable on and along the rail-shaped area (118).

2. The apparatus (100) according to claim 1,
wherein the lifting device (120) is configured to be connectable to a working machine (400), preferably a hydraulic working machine (400), and the at least one supporting body (121) is configured to be liftable and lowerable, preferably hydraulically liftable and lowerable.

3. The apparatus (100) according to claim 2,
wherein the lifting device (120) comprises at least one hydraulic cylinder (122).

4. The apparatus (100) according to one of claims 1 to 3,
wherein the lifting device (120) comprises a first lifting unit (120a) and a second lifting unit (120b) configured on opposite longitudinal sides (101) of the apparatus (100).

5. The apparatus (100) according to one of the preceding claims,
wherein the at least one supporting body (121) is configured so as to be movable in a horizontal direction perpendicular to the longitudinal direction of the swap body (200).

6. The apparatus (100) according to one of the preceding claims,
wherein the at least one fixing device (111) is configured to be pivotable.

7. The apparatus (100) according to one of the preceding claims,
wherein the body holding device (110) and the lifting device (120) are fastened to the floor or a base plate (130).

8. The apparatus (100) according to one of the preceding claims,
wherein the apparatus (100) comprises at least one entry rail (131) for positioning the heavy goods vehicle (300).

9. Method for swapping a swap body (200) on a heavy goods vehicle (300), the method comprising the following steps:
- positioning a heavy goods vehicle (300) with swap body (200) in an apparatus (100) according to any of the previous claims for swapping a swap body (200);
- closing at least two fixing devices (111) on the body holding device (110) of the apparatus (100) to fix and hold a longitudinal direction position of the swap body (200) relative to the fixing device (111);
- releasing a latch (210) between the swap body (200) and the vehicle frame (310) of the heavy goods vehicle (300) by moving the swap body (200) and the vehicle frame (310) relative to each other;
- arranging at least one supporting body (121) of the lifting device (120) on the swap body (200); and
- lifting the swap body (200) by lifting the supporting body (121).

10. The method according to claim 9,
wherein the release of the latch (210) is achieved by moving the heavy goods vehicle (300).

11. The method according to claim 9,
wherein the release of the latch (210) is achieved by moving the at least two fixing devices (111).

## Revendications

1. Appareil (100) pour remplacer une caisse mobile (200) sur un camion (300), dans lequel l'appareil (100) comprend :
- un dispositif de maintien de caisse (110) pour maintenir la caisse mobile (200) du camion (300), et
- un dispositif de levage (120) pour soulever et abaisser la caisse mobile (200), dans lequel le dispositif de maintien de la caisse (110) comprend au moins deux dispositifs de fixation (111) qui sont conçus pour fixer et maintenir au moins une position longitudinale de la caisse mobile (200) par rapport au dispositif de fixation (111) lors de l'opération de remplacement, et
dans lequel le dispositif de levage (120) présente au moins un élément de support (121) qui est conçu de manière à pouvoir être soulevé et abaissé dans le sens vertical,
dans lequel les au moins deux dispositifs de fixation (111) sont disposés de manière mobile sur un dispositif de support (114) entre une position de fixation, dans laquelle la position longitudinale de la caisse mobile (200) est fixée et maintenue par rapport aux dispositifs de fixation (111), et une position de libération, dans laquelle la position longitudinale de la caisse mobile (200) est déplaçable par rapport aux dispositifs de fixation (111),
**caractérisé en ce que**
le dispositif de support (114) relie entre eux les au moins deux dispositifs de fixation (111),
**en ce que** les au moins deux dispositifs de fixation (111) sont conçus de manière à pouvoir être déplacés hydrauliquement conjointement avec le dispositif de support (114) dans une direction horizontale parallèle à la direction longitudinale de la caisse mobile (200),
**en ce que** le dispositif de maintien de la caisse (110) comporte au moins un dispositif de support (117) qui présente une zone supérieure (118) en forme de rail, et
**en ce que** le dispositif de support (114) comprend au moins une zone en forme de glissière (116) qui est conçue pour se déplacer sur et le long de la zone en forme de rail (118).

2. Appareil (100) selon la revendication 1,
dans lequel le dispositif de levage (120) est conçu de manière à pouvoir être relié à une machine de travail (400), de préférence une machine de travail hydraulique (400), et l'au moins un élément de support (121) est conçu de manière à pouvoir être soulevé et abaissé, de préférence de manière à pouvoir être soulevé et abaissé hydrauliquement.

3. Appareil (100) selon la revendication 2,
dans lequel le dispositif de levage (120) comprend au moins un cylindre hydraulique (122).

4. Appareil (100) selon l'une des revendications 1 à 3,
dans lequel le dispositif de levage (120) comprend une première unité de levage (120a) et une deuxième unité de levage (120b) formées sur des côtés longitudinaux opposés (101) de l'appareil (100).

5. Appareil (100) selon l'une des revendications précédentes,
dans lequel ledit au moins un élément de support (121) est configuré pour se déplacer dans une direction horizontale perpendiculaire à la direction longitudinale de la caisse mobile (200).

6. Appareil (100) selon l'une des revendications précédentes,
dans lequel ledit au moins un dispositif de fixation (111) est conçu pour pivoter.

7. Appareil (100) selon l'une des revendications précédentes,
dans lequel le dispositif de maintien de la structure (110) et le dispositif de levage (120) sont conçus pour être fixés au sol ou à une plaque de sol (130).

8. Appareil (100) selon l'une des revendications précédentes,
dans lequel l'appareil (100) comprend au moins un rail d'entrée (131) pour positionner le camion (300).

9. Procédé de remplacement d'une caisse mobile (200) sur un camion (300), dans lequel le procédé comprend les étapes suivantes :
- positionner un camion (300) à caisse mobile (200) dans un appareil (100) selon l'une des revendications précédentes pour remplacer une caisse mobile (200) ;
- fermer au moins deux dispositifs de maintien (111) sur le dispositif de maintien de caisse mobile (110) de l'appareil (100) afin d'immobiliser et de maintenir une position longitudinale de la caisse mobile (200) par rapport au dispositif de fixation (111) ;
- libérer un mécanisme de verrouillage (210) entre la caisse mobile (200) et le châssis (310) du camion (300) en déplaçant la caisse mobile (200) et le châssis (310) l'un par rapport à l'autre ;
- placer au moins un élément de support (121) du dispositif de levage (120) sur la caisse mobile (200) ; et
- soulever la caisse mobile (200) en soulevant l'élément de support (121).

10. Procédé selon la revendication 9,
dans lequel la libération du mécanisme de verrouillage (210) s'effectue en déplaçant le camion (300).

11. Procédé selon la revendication 9,
dans lequel la libération du mécanisme de verrouillage (210) s'effectue en déplaçant les au moins deux dispositifs de fixation (111).
